# EUROPEAN PATENT APPLICATION

(11) **EP 3 618 448 A1**
(43) Date of publication of application: **04.03.2020**
(21) Application number: 17907624.5
(22) Date of filing: 25.04.2017
(51) Int. Cl.: H04N 21/258

(54) **METHOD FOR AUTOMATICALLY MAKING AND DELIVERING PERSONALISED VIDEOS WITH AUDIO, USING BROWSING INFORMATION FROM EACH USER OR GROUP OF USERS**

(71) Applicant: Izquierdo Domenech, Alejandro, 08025 Barcelona (ES)
(72) Inventor: DIAZ WILLIAMS, Carolina, 08025 Barcelona (ES); IZQUIERDO DOMENECH, Alejandro, 08025 Barcelona (ES)
(74) Representative: González Poveda, Sara
(86) International application number: PCT/ES2017/070251
(87) International publication number: WO 2018/197732

(57) **Abstract**

A method for automatically making and serving customised audio videos, based on browsing information from each user or group of users, using a computer software system, which, based on user browsing data, creates a personal video for each user or group of users, consisting of interspersed video snippets with common content for the differentvideos intended to promote a product or service of a company and with variable content depending on different characteristics of the user; it also creates a personal audio, with the same premises, automatically edits and records a video with the corresponding audio track in a video file, which when the user is identified through a data management platform (DMP), is downloaded and displayed in the user's browser.

## Description

### Object of the invention

The invention relates to a method for displaying videos with dynamic audio and video content, wherein, depending on certain user identification variables collected anonymously from the user's browsing data, both on the web sites of the end customer and off-site, it allows to generate a customised content, in terms of both video and associated audio content in order to then be displayed to this user.

This method is based on a system of work queues for the creation of videos, of storage and identification of user and video, which through the processing of videos and data allows to display the customised video to each user. The video creation takes place virtually in real time on a video creation server and is displayed on the user's device. These videos are intended to be shown to selected users via digital signal, video on demand (VOD), or on the internet

### Background of the invention

Digital marketing uses data management platforms (DMPs) that allow advertisers to create targeted audiences to target, based on a combination of data from different sources. They are therefore technology platforms that integrate, collect and manage large amounts of data, which can be collected from advertisers' own sources and from external sources.

The data collected from advertiser's own sources are those customised data (first party), which can be collected from the advertiser's own website, through user browsing, which are unique data for each user, collected in general statistics such as the number of visits or the number of clicks; email marketing campaigns, with metrics such as clicks, brand awareness or conversions; interaction on social networks, etc. The data added by third parties come from sources external to advertisers and are common user segmentation data used by companies, including, for example, age, gender, socio-professional category, or geographical location.

DMP platforms are ideal for developing demographic or user behaviour segments, which can be used subsequently in digital advertising, creating marketing actions specially designed from that data. These types of DMP platforms must be able to manage data and accumulate large amounts of this data for to then be used in the development of digital marketing campaigns.

Media Demand-Side Platform (DSP) systems are platforms that allow to buy digital advertising impressions through different advertising exchange systems where the spaces that a publisher enables on their websites or apps are bought directly, or through an intermediary, in an automated manner and without having to deal individually with each publisher. The DS P platform calculates which is the cheapest impression or banner that generates the highest revenues to each campaign, so thatthanks to this type of platforms it is possible to extrapolate the revenues generated by the purchase to a larger audience, to know if the purchased product is profitable, what performance it offers to the purchaser and if this will prove to be a success in the long run.

The use of video as an advertising medium through digital channels is expanding rapidly and is used in all channels that are commonly used, such as social media, in e-marketing campaigns, whether by email or through websites, etc. Companies often have a variety of digital content on these channels, including information, photos, etc., and in many cases also have video clips that have been shot with digital cameras or mobile phones, which are used for promotional purposes. Many companies have a collection of videos, related to the products they sell and/or the services they offer, that are displayed when the user accesses a certain website on which this product or service offered is specified; but the video is completely generic and common to all users who access this site.

Based on data added by third parties, some companies are able to select an image, audio or video from a general database and broadcast it once they have been able to determine that the user meets certain general characteristics from the user's web browsing data. For example, if this characteristic is "woman living in Madrid, when it is established that a user who meets these characteristics is accessing, an image, audio or video previously planned is selected and broadcast; but in no case is the multimedia message customised.

### Description of the invention

The method for automatically making and serving customised audio videos of the present invention allows this task to be performed automatically, with customised content, from each user or group of users'web browsing data; to this end, the method of the invention preferably works with customised (first party) and anonymous data of users while browsing web sites using various existing technologies: cookies, url, sessions, login, HSTS supercookies, browser fingerprint systems, network footprints and geolocation, or the like.

This method for automatically making customised videos, with integrated audio, uses a computer software system including the following routines, steps, or stages:
a) Obtaining browsing data from users, using various existing technologies: cookies, urls, sessions, login, HSTS supercookies, browser fingerprint systems, network footprints and geolocation, or the like, which allow the creation of a personal profile of each user, or of a group of users;
b) Creating a personal video for each user or group of users, consisting of video snippets (images or video clips) with content common to the different videos intended to promote a product or service of a company (Fvc1 _ _ _ _ Fvc2 _ _ _ _ Fvc3 _ _ _ _ Fvc4); and at least one video snippet (images or video clips) with variable content (_ _ _ _ Fvv1 _ _ _ _ Fvv2 _ _ _ _ Fvv3 _ _ _ _) depending on various characteristics of the user, which conveniently interspersed between the snippets with common content, allows to create a customised video that combines common and variable clips (Fvc1, Fvv1, Fvc2, Fvv2, Fvc3, Fvv3, Fvc4) or allows to overlap information.
c) Creating a personal audio for each user or group of users, consisting of audio snippets (music or phrases) with common content for the different audio intended to promote a product or service of a company (Fac1 _ _ _ _ Fac2_ _ _ _ Fac3 _ _ _ _ Fac4); and at least one audio snippet (music or phrases) with variable content (_ _ _ _ Fav1 _ _ _ _ Fav2 _ _ _ _ Fav3 _ _ _ __) according to various characteristics of the user, which interspersed conveniently between the fragments with common content, allow to form a customised audio sequence (Fac1, Fav1, Fac2, Fav2, Fac3, Fav3, Fac4);
d) automatically editing a personal video to each user, with the corresponding also personal audio track, and recording a video computer file, with this edition, on a storage and video service server, pending the user's continued browsing, or the user browsing again, through a space enabled for the purchase or promotion of the promoter's product or services; and
e) receiving user data through the data management platform (DMP) and, once identified, either in a new access and/or when they continue browsing for a certain time, serving the video file to the user's browser or app for display in a space enabled for the purchase or promotion of the product or services of the promoter.

Once data has been collected from the advertiser's own sources (first party), the video is only displayed in the browser or app of the customised user when a request is received from the media demand-side platform (DSP) to display advertising from the promoting company and when it is detected that this user, or group of users, already has a customised video created by the system.

When data is added by third parties, it comes from sources external to the advertiser, the video with customised audio is sent to the media demand-side platform (DSP) when a request is received from the media demand management system (DMP) to display advertising from the promoting company and this user, or group of users, already has a customised video created by the system.

The computer software system that implements the method for automatically making customised videos provides a means for storing the video and audio snippets on a video creation server, separately, so that the snippets can be used in different final videos, depending on the advertising campaign. Common snippets are chosen according to the advertising campaign in question, while variable snippets are automatically chosen using selection algorithms, depending on the existing personal data of each user.

Once the customised videos have been created, they are saved, together with the identifier of the user or of a third party added data provider and/or of the company that has enabled the space for the purchase or promotion of the product or services, on the video storage server, in order that, each time the user is identified, they are displayed again for the duration of the advertising campaign.

The aforementioned automatic video generation software also includes customised statistical management routines for the promoting company, which include information about the videos served and the actions demanded by each medium.

### Description of the drawings

In order to complement the description that is being carried out and with the purpose of facilitating the understanding of the characteristics of the invention, the present description is accompanied by a set of drawings wherein, by way of a non-limiting example, the following has been represented:

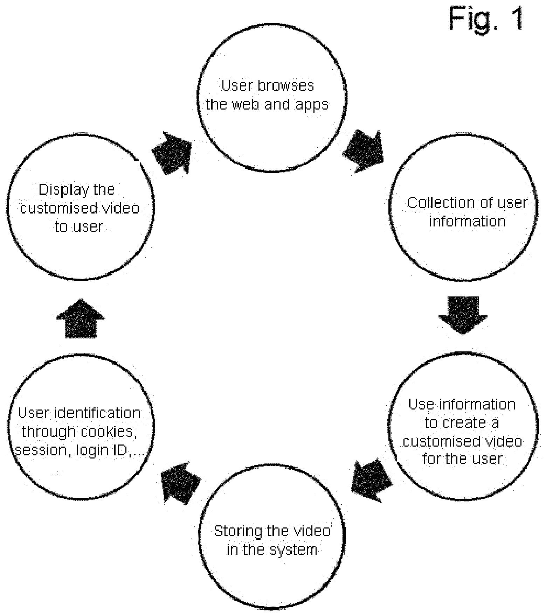

Figure 1 is a diagram illustrating the method for creating customised videos and the flow of steps or stages thereof, according to the present invention.

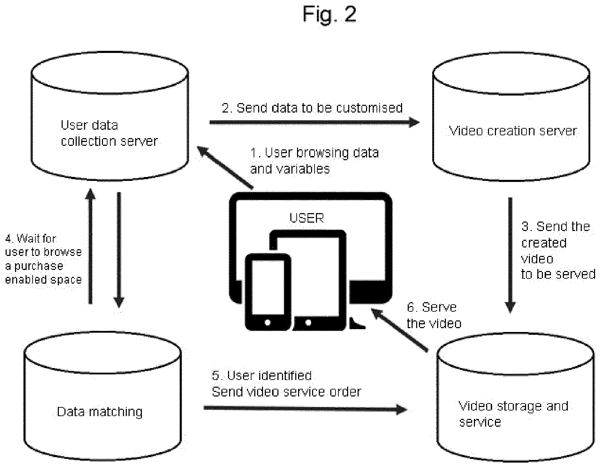

Figure 2 shows the overall architecture of the system according to one embodiment of the present disclosure.

### Preferred mode for carrying out the invention

To facilitate understanding of the invention we will use an example of a user browsing the website of an insurance company (CASER) looking for the price of fully comprehensive insurance for their vehicle (Toyota Auris).

When the user browses the web, they identify themselves using various existing technologies: cookies, urls, sessions, login, HSTS supercookies, browser fingerprint systems, network footprints and geolocation, or the like, in order to subsequently display to them customised ads with sound, in which a sequence of images is seen, for example with the text: 'CASER fully comprehensive insurance for your Toyota Auris for only 460 euros_ and simultaneously reproducing the same text "AXA fully comprehensive insurance for your Toyota Auris for only 460 euros_

To create the customised video and audio, the following are recorded and stored:
- On the one hand some video snippets (images orvideo clips) with the common content for the different CASER insurance ads, in the example showing:
   (CAS E R fully comprehensive insurance) _ _ _ _ (for your) _ _ _ _ (for only) _ _ _ _( euros)
- On the other hand, some video pieces with variable content, with all the variables necessary to create the video:
   _ _ _ _(fully comprehensive; third parties, etc.) _ _ _ _(TOYOTA Auris, etc.)_ _ _ _ (460,...)

Obviously, this involves storing a multitude of video pieces with variable content related to: different makes and models of vehicles; types of insurance; and prices of the same. These video snippets are edited on the "video creation" server and stored on the "video storage and service" server.

To create an audio track the same operation as with the video is followed, that is, recording phrases with gaps (silences):
- On the one hand, with fixed content:
   (CAS E R fully comprehensive insurance) _ _ _ _ (for your) _ _ _ _ (for only) _ _ _ _( euros)
- On the other hand, some sentences with all the variables necessary to create several complete sentences:
   _ _ _ _(fully comprehensive; third parties, etc.) _ _ _ _(TOYOTA Auris, etc.)_ _ _ _ (660,...)

On the "video creation" server a personal audio track is generated and then said track is edited on the corresponding customised video in a video file which is saved on the "video storage and service" server together with the identifier of the user or of a third party added data provider and/or of the company that has enabled the space for the purchase or promotion of the product or services, in order that, each time the user is identified, they are displayed again for the duration of the advertising campaign. The most notable feature of this method is that it relates each video to the user's data, in order to customise the videos.

All media demand-side platforms (DSP) continuously send requests to display advertising, when one of the users, for whom a customised video has already been recorded, is detected browsing the Internet, this video is sent to the DSP for downloading and playback in the user's browser or application.

When the information has been purchased (third party) and the request for advertising for an identified user is received in the media demand-side platform (DSP), the video with customised audio is sent to the media demand-side platform (DSP) which has sold the information.

## Claims

1. A method for automatically making and serving customised audio videos, based on browsing information from each user or group of users using a computer software system comprising the following steps:
a) obtaining browsing data from users, using various existing technologies: cookies, urls, sessions, login, HSTS supercookies, browser fingerprint systems, network footprints and geolocation, or the like, which allow the creation of a personal profile of each user, or of a group of users;
b) creating a personal video for each user or group of users, consisting of:
- at least one video snippet (images or video clips) with common content for the different videos intended to promote a product or service of a company (Fvc1 _ _ _ _ _ Fvc2 _ _ _ _ Fvc3 _ _ _ _ Fvc4); and
- at least one video snippet (images or video clips) with variable content (_ _ _ _ Fw1 _ _ _ _ Fvv2 _ _ _ _ _ Fvv3 _ _ _ _) depending on various user characteristics, which conveniently interspersed between the snippets with common content, allow creating a customised video (Fvc1, Fvv1, Fvc2, Fvv2, Fvc3, Fvv3, Fvc4);
c) creating a personal audio for each user or group of users, consisting of:
- at least one audio snippet (music or phrases) with common content for the different audios intended to promote a product or service of a company (Fac1 _ _ ___ Fac2 _ _ _ _ Fac3 _ _ _ _ Fac4); and
- at least one audio snippet (music or phrases) with variable content (_ _ _ _ Fav1 _ _ _ _ Fav2 _ _ _ _ _ Fav3 _ _ _ _) depending on various user characteristics, which conveniently interspersed between the snippets with common content, allow creating a customised audio (Fac1, Fav1, Fac2, Fav2, Fac3, Fav3, Fac4);
d) automatically editing a personal video with the also personal audio track corresponding to each user and recording a computer file, with this edition, on a storage and video service server, pending the user's continued browsing, or the user browsing again, through a space enabled for the purchase or promotion of the promoter's product or services; and
e) receiving user data through a data management platform (DMP) and, once identified, either in a new access and/or when they continue browsing for a certain time, serving the video file to the user's browser for its downloading and display in a space enabled for the purchase or promotion of the product or services of the promoter.

2. The method for automatically making customised audio videos according to claim 1 **characterised in that** once data has been collected from the advertiser's own sources (first party), the video is only displayed to the customised user while they are browsing through web pages and apps, when a request is received from the media demand-side platform (DSP) to display advertising from the promoting company and when it is detected that this user, or group of users, already has a customised video created by the system.

3. The method for automatically making customised audio videos according to claim 1 **characterised in that** when data is added by third parties, coming from sources external to the advertiser, the video with customised audio is sent to the media demand-side platform (DSP) when a request is received from the media demand management system (DMP) to display advertising from the promoting company and this user, or group of users, already has a customised video created by the system.

4. The method for automatically making customised audio videos according to any one of the preceding claims, **characterised in that** the video and audio snippets are saved on a separate video creation server.

5. The method for automatically making customised audio videos according to any one of the preceding claims, **characterised in that** the customised videos are saved, together with the identifier of the user or of a third party added data provider and/or of the company that has enabled the space for the purchase or promotion of the product or services, on the video storage server.

6. The method for automatically making customised audio videos according to any one of the preceding claims, **characterised in that** the video automatic generation software includes customised statistical management routines for the promoting company, which include information about the videos served and the actions demanded by each medium.
